# FASCICULE DE BREVET EUROPEEN

(11) **EP 2 510 813 B1**
(45) Date de publication et mention de la délivrance du brevet: **29.07.2015**
(21) Numéro de dépôt: 12153151.1
(22) Date de dépôt: 30.01.2012
(51) Int. Cl.: A23L 1/317, A22C 13/00

(54) **COMPOSITION POUR BOYAU VÉGÉTAL ALIMENTAIRE, PROCÉDÉ DE PRÉPARATION ET PROCÉDÉ D'ENROBAGE D'UNE PRÉPARATION ALIMENTAIRE CORRESPONDANTS**
KOMPOSITION UND VERFAHREN FÜR DIE HERSTELLUNG EINER PFLANZLICHEN NAHRUNGSMITTELHÜLLE UND ENTSPRECHENDE UMHÜLLTE NAHRUNGSMITTEL
COMPOSITION AND METHOD FOR THE PRODUCTION OF A VEGETABLE EDIBLE CASING AND A CORRESPONDING ENROBED FOOD COMPOSITION

(30) Priorité: 12.04.2011 FR 1153206; 12.04.2011 US 201113085043
(43) Date de publication de la demande: 17.10.2012
(73) Titulaire: Sonjal, 35150 Brie (FR)
(72) Inventeur: Tanguy, Alain, 35410 Chateaugiron (FR)
(74) Mandataire: Ermeneux, Bertrand

(56) Documents cités:
- EP-A1- 2 071 959
- WO-A2-2006/135238
- JP-A- 2006 296 319
- US-A- 3 943 262
- US-A1- 2009 061 051
- US-A1- 2009 317 522
- Lizhe Z. Wang ET AL: "Assessment of film-forming potential and properties of protein and polysaccharide-based biopolymer films", International Journal of Food Science and Technology, vol. 42, no. 9, 1 September 2007 (2007-09-01), pages 1128-1138, XP055145535, ISSN: 0950-5423, DOI: 10.1111/j.1365-2621.2006.01440.x

## Description

### 1. Domaine de l'invention

Le domaine de l'invention est celui de l'agroalimentaire, et en particulier de la transformation de la viande et du poisson sous forme de saucisses.

Plus précisément, l'invention concerne une composition pour l'enrobage d'une préparation alimentaire, permettant notamment de former une enveloppe végétale comestible, et un procédé correspondant d'enrobage d'une préparation alimentaire.

L'invention trouve notamment une application dans la fabrication de saucisses à base de porc, d'agneau, de mouton, de boeuf, de veau, de volaille et/ou de poisson. Elle peut également être mise en oeuvre pour produire des saucisses préparées à partir de légumes, de fruits et/ou de fromage.

Elle peut également être mise en oeuvre pour enrober le pied d'un légume ou la tranche d'un légume coupé et préserver sa fraîcheur.

### 2. Etat de la technique

Les enveloppes, ou peaux, principalement à base de matière végétale, encore appelées communément boyau végétal alimentaire lorsqu'elles sont de forme tubulaire, sont actuellement largement utilisées dans l'industrie agro-alimentaire.

Ainsi, des boyaux alimentaires d'origine végétale sont très largement employés pour enrober la garniture, ou base, d'une saucisse, du fait notamment de leur coût avantageux en comparaison des boyaux d'origine animale, et de la possibilité, qu'ils offrent, de produire industriellement des saucisses de taille standardisée.

On connait des enveloppes végétales pelables pour saucisse sèche ou pour saucisse crue, telle que le salami.

Le document US-5928737 propose par exemple de réaliser une enveloppe pelable à partir d'une pâte faiblement hydratée d'amidon et d'alginate.

Le document "Assessment of film-forming potential and properties of protein and polysaccharide-based biopolymer films", de Wang et al.et publié dans International Journal of Food Science and Technology (vol. 42, no. 9, 1 septembre 2007 , pages 1128-1138) divulgue des compositions d'enrobage ou d'emballage comestibles d'aspect transparent, et comprenant préférentiellement 2-3% de CMC, 1-1,5% d'alginate et 2-3% d'amidon de pomme de terre.

Il est par ailleurs fréquent que des enveloppes pelables de type connu contiennent des fibres cellulosiques.

Ces enveloppes pelables épaisses, et peu digestes, ne sont cependant pas destinées à être consommées avec la garniture de la saucisse.

On connait également des enveloppes comestibles fines d'origine essentiellement végétale, utilisées par exemple comme boyau des saucisses à cuire produites industriellement.

Ces enveloppes comestibles fines sont généralement d'une épaisseur inférieure à 100 micromètres, afin notamment de respecter des prescriptions réglementaires qui imposent, par exemple, qu'elles forment moins de 3% du volume du produit alimentaire fini.

Ces enveloppes comestibles sont le plus souvent obtenues à partir d'une composition aqueuse à base d'alginate se présentant notamment sous forme d'une pâte, qu'on applique directement sur l'aliment à enrober, par exemple en immergeant l'aliment dans la composition, en pulvérisant la composition sur la surface de l'aliment, ou en co-extrudant la composition autour de l'aliment à enrober.

Selon une autre technique connue, une enveloppe comestible peut être formée par extrusion, en vue d'y embosser une préparation alimentaire.

On a proposé d'incorporer du collagène dans la composition des enveloppes comestibles, afin de leur conférer une résistance à l'étirement convenable, et/ou d'augmenter la viscosité de la composition à base d'alginate, dans le but de pouvoir former ces enveloppes par extrusion ou par co-extrusion.

Un inconvénient du collagène est qu'il est extrait principalement des os, des arêtes ou de la peau d'un animal. Il ne convient donc pas pour produire des enveloppes de produits alimentaires végétariens, halal ou kasher.

Un autre inconvénient du collagène est que son utilisation est susceptible d'engendrer des risques sanitaires pour le consommateur, en permettant la transmission de maladies, à l'origine du syndrome de Creutzfeldt-Jacob, par exemple.

Par ailleurs, on constate qu'une enveloppe produite à base de collagène s'avère fragile. Il est donc nécessaire de procéder à un post-traitement chimique pour la renforcer, par exemple en utilisant des aldéhydes sous la forme de fumée liquide, ce qui modifie significativement la saveur du produit alimentaire consommé avec son enveloppe.

Pour ces raisons, on a cherché à produire des enveloppes comestibles exclusivement à partir de matière végétale.

On a ainsi pensé à incorporer des galactomannanes, tels que la gomme de guar, et/ou des dérivés de cellulose à la composition de l'enveloppe en guise d'épaississant, et/ou pour renforcer et stabiliser l'enveloppe dans le temps. On connait par exemple du document EP-A-1311165 des compositions à base d'alginate et de galactomannanes, ou à base d'alginate et de dérivés de cellulose.

Un inconvénient des galactomannanes est qu'ils confèrent à l'enveloppe une texture lisse et un aspect brillant peu naturels, évoquant une matière plastique. Sur la base d'un examen visuel, un consommateur à la recherche d'un produit de qualité a donc tendance à se détourner d'un produit alimentaire dont l'enveloppe contient des galactomannanes, quelle que soit la qualité de ce produit.

Il est connu par ailleurs que l'adjonction de dérivés de cellulose dans le but d'épaissir une composition d'enrobage ne permet pas à elle seule d'apporter à l'enveloppe une souplesse convenable, permettant d'éviter une déchirure de l'enveloppe lors de sa fabrication ou de la cuisson.

Le document US-2009/0317522 propose ainsi d'utiliser un mélange de cellulose et d'amidon pour adapter la rhéologie, et notamment épaissir une pâte à base d'alginate destinée à être appliquée par coextrusion autour de la garniture d'une saucisse.

### 3. Objectifs de l'invention

L'invention a donc notamment pour objectif de pallier les inconvénients de l'état de la technique cités ci-dessus.

Plus précisément l'invention a pour objectif de fournir une technique d'enrobage d'une préparation alimentaire qui satisfasse les critères de qualité actuellement requis par la plupart des consommateurs.

Notamment, l'invention a pour objectif de fournir une telle technique qui confère à l'enrobage une texture et un aspect rappelant une enveloppe traditionnelle d'origine animale.

Un objectif de l'invention est également de fournir une telle technique qui limite l'exsudation de liquide par la préparation alimentaire, ou phénomène de synérèse, et permette de conserver la surface de l'enveloppe sensiblement sèche visuellement et au toucher.

Un autre objectif de l'invention est de fournir une telle technique qui n'altère pas la saveur de la préparation alimentaire enrobée, et soit sans danger pour le consommateur.

Un objectif de l'invention est également de proposer une telle technique qui permette d'obtenir un enrobage présentant une résistance mécanique et une élasticité convenables.

Encore un objectif de l'invention est d'offrir une technique permettant d'obtenir un enrobage stable dans le temps, au moins pendant plusieurs jours.

### 4. Exposé de l'invention

La demanderesse a constaté de manière surprenante et inattendue, en recherchant une composition aqueuse pour l'enrobage d'une préparation alimentaire comprenant essentiellement de l'eau permettant d'atteindre ces objectifs, qu'en associant principalement de l'alginate, de l'amidon et de la gomme de cellulose avec de l'eau dans des proportions spécifiques et inédites, il était possible d'obtenir un enrobage de couleur sensiblement blanche, dont l'aspect mat et opaque, la texture, l'élasticité et la résistance mécanique rappellent celles d'un boyau animal.

À cet effet l'invention a pour objet une composition comprenant 2 à 5% en poids humide d'alginate, 1 à 2,5% en poids humide d'amidon, et 0,6 à 1,3% en poids humide de carboxyméthylcellulose.

Dans le cadre de l'invention, il peut s'agir d'alginate de sodium ou de tout type d'alginate ou mélange d'alginates de type connu convenable.
Grâce à l'invention, on obtient une composition, sous forme de pâte d'enrobage, qui conjugue avantageusement une apparence proche d'une enveloppe animale naturelle, et des propriétés rhéologiques la rendant apte à être appliquée autour de l'aliment par co-extrusion, par aspersion ou par immersion, de façon optimale. Notamment, la plupart des compositions selon l'invention présentant une viscosité apparente comprise entre 40 et 70 Pa.s, elles peuvent avantageusement être employées pour fabriquer des enveloppes de saucisses par co-extrusion sur des équipements de co-extrusion existants, sans procéder à des modifications substantielles de ces équipements. Par de simples essais de routine, l'Homme du métier sera en mesure d'adapter le dosage respectif en alginate, en amidon et en carboxyméthylcellulose de la composition selon l'invention, dont on rappelle qu'il est compris entre 1 et 5% en poids humide pour l'alginate, entre 1 et 2,5% en poids humide pour l'amidon, et entre 0,6 et 1,3% en poids humide pour la carboxyméthylcellulose, convenant à l'équipement de co-extrusion dont il dispose, à savoir notamment du type de buse, de pompe et de poussoir, afin d'assurer un débit et une pression constants au niveau de la filière de co-extrusion.

On constate par ailleurs que l'enveloppe obtenue après gélification de l'enrobage présente une adhérence convenable avec la préparation alimentaire, et reste stable plusieurs jours ou semaines bien qu'elle soit constituée majoritairement d'eau. Par ailleurs, on observe que l'enveloppe obtenue ne se délite pas si elle est soumise à un traitement dans un bain acide, et à la cuisson, par exemple lorsque la préparation alimentaire et son enveloppe sont cuits au four, bouillis ou frits.

En outre la demanderesse a constaté une limitation très sensible, et inhabituelle du phénomène de synérèse à la surface de l'enveloppe, qu'elle n'avait jusqu'alors pas observée pour des compositions à base d'alginates et de galactomannanes par exemple.

Selon une hypothèse plausible, cette conjonction de qualités de l'enrobage pourrait s'expliquer au moins en partie par une synergie particulièrement efficace entre l'alginate et l'amidon dans les proportions de l'invention, associée à une faible action de la carboxyméthylcellulose, aussi dénommée gomme de cellulose, sur les liaisons chimiques formées entre l'alginate et l'amidon.

Il convient de noter que dans le cadre de l'invention, l'expression comprenant essentiellement de l'eau vise des compositions comprenant au moins 85% d'eau, préférentiellement au moins 90% d'eau et encore plus préférentiellement au moins 92% d'eau.

Dans au moins un mode de réalisation avantageux de l'invention, une telle composition comprend 4 à 5% en poids humide d'alginate, 1,2 à 1,8% en poids humide d'amidon et 0,9 à 1,2 % en poids humide de carboxyméthyl cellulose.

Préférentiellement, le rapport massique amidon sur alginate au sein de ladite composition est compris entre 0,2 et 0,45.

La demanderesse a en effet découvert qu'il se produisait, de façon inattendue, une synergie particulièrement efficace entre l'amidon et l'alginate dans cette gamme de rapport massique, notamment au niveau de la texture et de l'élasticité de la composition obtenue.

De façon avantageuse, le rapport massique carboxyméthyl cellulose sur amidon au sein de ladite composition est compris entre 0,4 et 0,8.

On obtient ainsi une composition présentant à la fois une élasticité et une viscosité convenables, notamment pour une application par co-extrusion.

Avantageusement, ledit alginate est agencé de sorte qu'une solution aqueuse dont le soluté est formé d'un pourcent en masse dudit alginate présente une viscosité comprise entre 0,3 et 0,5 Pa.s à 20°C.

Ainsi, en privilégiant des alginates de faible viscosité, on peut ajuster précisément la viscosité de la composition par un dosage approprié des quantités d'amidon et de gomme de cellulose.

Selon un mode de réalisation particulièrement avantageux de l'invention, ledit amidon est un amidon soluble à froid, et préférentiellement de l'amidon modifié de pomme de terre soluble à froid.

On obtient ainsi par simple mélange une composition sensiblement homogène, exempte d'agglomérats ou de grumeaux d'amidon, du fait de la solubilité de l'amidon soluble à froid dans l'eau à température ambiante. Il n'est donc pas nécessaire de chauffer la composition pour y dissoudre les amidons, ce qui permet de réaliser des économies d'énergie et de gagner du temps.

Il convient par ailleurs de noter que, de façon connue en soi, la gomme de cellulose qui intervient également dans la composition selon l'invention est avantageusement un additif soluble à froid.

De façon avantageuse, ladite eau présente une dureté inférieure à 0,2°f (2 ppm ou 2mg/L de CaCO₃), préférentiellement inférieure ou égale à 0,1°f (1 ppm ou 1mg/L de CaCO₃).

Ainsi, on contrôle l'apport de calcium par adjonction d'eau, et donc le processus de gélification des alginates. La composition peut par conséquent être mise en oeuvre sur une machine de co-extrusion, sans risque de se figer et de bloquer l'extrudeur dans laquelle elle transite, par exemple en cas d'arrêt temporaire ou de panne de la machine. C'est seulement lorsque la préparation alimentaire enrobée est plongée, après co-extrusion, dans un bain de gélification, ou bain de fixation, contenant des sels de calcium dans lequel l'alginate gélifie, que l'enrobage se fixe et devient une enveloppe solide.

Dans au moins un mode de réalisation de l'invention, une composition telle que décrite ci-dessus comprend un composant acidifiant appartenant au groupe comprenant au moins l'acide lactique, l'acide citrique, l'acide acétique ou un mélange d'au moins deux desdits acides.

On améliore ainsi la stabilité de l'enveloppe dans le temps.

De façon préférentielle, le pH de ladite composition est compris entre 3,8 et 4,2.

En contrôlant ainsi le pH de la composition, on réduit la charge des polysaccharides présents dans la composition, tels que l'amidon et la gomme de cellulose.

En conséquence, la gélification de l'alginate est peu affectée par la présence de polysaccharides dans la composition. Par ailleurs, la viscosité de la composition obtenue permet de co-extruder la composition autour de la préparation alimentaire avec des équipements de co-extrusion usuels.

Selon un aspect particulier de l'invention, une composition telle que décrite ci-dessus comprend un pourcentage massique de protéine végétale inférieur au pourcentage massique d'alginate dans ladite composition.

L'adjonction de protéines végétales dans la composition permet notamment d'améliorer la coagulation de l'enrobage au contact d'un bain calcique entraînant une rétractation de l'enveloppe concomitante avec celle de la base lors de la cuisson de l'aliment enrobé. La présence de protéines végétales dans la composition permet également, dans certains cas, de rendre l'apparence de l'aliment enrobé plus attractive, notamment au regard de sa coloration.

Les protéines végétales présentes dans la composition peuvent être choisies, par exemple, parmi les protéines de gluten, les protéines de pois, les protéines de soja et leur mélange.

Il convient par ailleurs de noter qu'en limitant la quantité de protéines végétales dans la composition, de façon à la conserver inférieure à la quantité d'alginate, on restreint la quantité totale d'agents gélifiants dans la composition. Ceci évite ainsi le risque de plissure et de déchirure de l'enrobage. En d'autres termes, l'ajout de protéines végétales dans des proportions inférieures à l'alginate améliore l'adhérence de l'enrobage sans affecter significativement ses propriétés rhéologiques, et notamment sa viscosité et le comportement du gel.

En outre, il n'est pas nécessaire de procéder à une opération de traitement de l'enrobage pour garantir sa tenue dans le temps sur plusieurs jours, après l'avoir déposé sur la préparation alimentaire.

Avantageusement, une telle composition comprend au moins un composé appartenant au groupe comprenant au moins :
- agents colorants alimentaires, de préférence Carmin de cochenille et/ou oléorésine de paprika ;
- agents conservateurs alimentaires, de préférence sorbate de potassium et/ou benzoate de sodium ;
- aromes alimentaires, notamment de la fumée liquide ;
- agents de marquage visuel et/ou gustatif, préférentiellement des particules d'épice en poudre de granulométrie convenable, aptes à permettre une co-extrusion de ladite composition autour de ladite préparation alimentaire.

Préférentiellement, le pourcentage massique de ce ou ces composés additionnels est inférieur à 0,5% du poids humide de la composition, et encore plus préférentiellement inférieur à 0,2% du poids humide de la composition.

Il est ainsi possible de conférer au produit alimentaire fini une variété importante de couleurs et de saveurs, et une durée de conservation convenable.

Par ailleurs, dans les compositions où on incorpore de fines particules d'épices moulues, par exemple des particules de poivre, on filtrera avantageusement la composition pour éviter que ces particules ne bouchent la filière d'une co-extrudeuse.

Les agents marquants peuvent être formés à partir de toute poudre alimentaire colorée connue convenable, relevée ou neutre sur un plan gustatif.

L'invention concerne également un procédé de préparation d'une composition aqueuse telle que décrite ci-dessus, comprenant une étape de filtration de la composition au travers d'un filtre de maille inférieure ou égale à 120 micromètres.

Selon un aspect particulier de l'invention, la valeur de ladite maille dudit filtre est égale à 80, 100, 110 ou 120 micromètres.

On filtre ainsi astucieusement les impuretés, ou les amas d'alginate, ce qui permet d'injecter la composition en continu, et avec un débit constant, dans la filière d'une co-extrudeuse de type connu dont l'écartement est généralement compris entre 30 et 200 micromètres, et le plus souvent entre 80 et 120 micromètres, sans risque de boucher la filière et d'être contraint d'interrompre la fabrication.

On note que cette étape de filtration fine inédite peut avantageusement être mise en oeuvre pour la préparation d'une composition permettant de former une enveloppe d'enrobage comestible d'une préparation alimentaire d'origine esssentiellement végétale contenant par exemple du collagène, des galactomannanes, des dérivés de cellulose et/ou de la cellulose monocristalline, ou tout autre protéine, polysaccharide, sucre, et/ou hydrocolloïde convenable.

L'invention concerne encore un procédé d'enrobage d'une préparation alimentaire avec une enveloppe végétale comestible.

Selon l'invention, un tel procédé d'enrobage comprend les étapes suivantes :
- obtention d'une composition aqueuse telle que l'une quelconque des compositions décrites ci-dessus ;
- immersion d'une portion substantielle de ladite préparation alimentaire dans ladite composition, aspersion de ladite composition autour d'une portion substantielle de ladite préparation alimentaire, ou co-extrusion de ladite composition autour de ladite préparation alimentaire, de façon à enrober ladite préparation alimentaire ;
- mise en contact de ladite préparation alimentaire enrobée avec un agent de gélification, de façon à fixer ladite enveloppe.

Notamment, l'agent de gélification peut se présenter sous la forme d'une solution calcique dans laquelle on plonge la préparation alimentaire enrobée, ou que l'on pulvérise sur l'enrobage.

Avantageusement, un tel procédé d'enrobage comprend une étape de filtration de la composition au travers d'un filtre de maille inférieure à 120 micromètres.

Cette étape de filtration peut par exemple être prévue avant d'introduire la composition dans la ligne de co-extrusion, ou encore à l'entrée de la buse de co-extrusion.

### 5. Description détaillée de l'invention

D'autres caractéristiques et avantages de l'invention apparaitront plus clairement à la lecture d'exemples de réalisation non limitatifs, donnés à titre de simples illustrations.

### Exemple 1 de préparation d'une composition

On verse 40 g d'acide lactique et 5000g d'eau adoucie de dureté inférieure à 1 ppm dans une cuve d'un cutter, d'une contenance maximale de 15 litres. Après avoir démarré le cutter, on verse progressivement dans la cuve 450g de poudre d'alginate de sodium, 180g de poudre d'amidon modifié de pomme de terre soluble à froid, 110g de poudre de carboxyméthylcellulose, et 10g de granulés de sorbate de potassium. Dès que les poudres et les granulés sont partiellement hydratés, on ajoute 4210 g d'eau adoucie supplémentaire dans la composition et on mélange et cisaille la composition à haute vitesse pendant 6 minutes, jusqu'à obtenir 10 kilogrammes d'une pâte homogène dans laquelle les poudres et les granulés sont totalement hydratés.

Cette pâte présente un pH égal à 4, une viscosité apparente de 62 Pa.s à 20°C (mesurée à l'aide d'un rhéomètre AR2000 de la société TA Instruments dans une géométrie plan-cône en acier inoxydable de diamètre 6 centimètres et d'angle au sommet égal à 1° et à une vitesse de 180 ± 20 tr/mn) et une concentration en sucre d'environ 6 degrés Brix.

L'alginate utilisé pour préparer cette composition présente un pH de 6,8 et une viscosité de 0,35 Pa.s à 20°C (mesurée à l'aide d'un viscosimètre Brookfield RV mobile n°1, à une vitesse de 20 tours par minute) lorsqu'il est dilué à 1% dans de l'eau adoucie.

La pâte est avantageusement pompée au travers d'un filtre de maille 80 microns, permettant de retirer des impuretés, et est conditionnée dans un bac plastique. Une feuille de protection plastique est placée sur la surface de la pâte et le bac est stocké dans une chambre froide maintenue entre 0 et 8°C, dans laquelle la pâte peut être conservée pendant 8 mois.

Dans une variante de l'exemple 1, 20g de poudre de poivre noir atomisé possédant une granulométrie inférieure à 50 micromètres sont substitués à 20g d'eau adoucie dans la préparation.

### Exemple 2 de préparation d'une composition

Cette deuxième composition comprend 9270g d'eau adoucie, 430g d'alginate de sodium, 160g d'amidon modifié de maïs soluble à froid, 125 g de gomme de cellulose, 10g de benzoate de sodium, et 5g de Carmin de Cochenille pour sa coloration.

Aucun acidifiant n'est ajouté dans la composition.

Cette composition présente une viscosité de 70 Pa.s à 20°C et un pH de 4,2. Elle s'avère moins élastique que dans l'exemple 1.

### Exemple 3 de préparation d'une composition

Cette troisième composition rassemble chacun des composés de l'exemple 2 dans des proportions identiques sauf en ce qui la gomme de cellulose dont la masse est réduite à 80g et la masse totale d'eau adoucie (9275g). En outre, 40g d'acide citrique sont incorporés dans cette troisième composition.

Cette composition présente un pH de 4 et une viscosité apparente réduite, égale à 43 Pa.s à une température de 20°C.

### Exemple 4 de préparation d'une composition

Cette quatrième composition comprend 9205g d'eau adoucie, 450g d'alginate de sodium, 150g d'amidon modifié de maïs soluble à froid, 90 g de gomme de cellulose, 10g de sorbate de potassium, 35g d'acide lactique et 60g de protéine de soja.

Ces quatre compositions présentent après gélification un aspect opaque, mat et blanchâtre, et une texture proches de ceux d'un boyau d'animal.

Dans la variante de l'exemple 1, on observe avantageusement une répartition homogène des particules marquantes de poivre sur la surface de l'enveloppe, permettant d'identifier au premier coup d'oeil qu'il s'agit d'une saucisse au poivre. En conséquence, le taux de poivre dans la base, et donc dans le produit fini, peut être sensiblement réduit.

Des essais mécaniques réalisés sur des enveloppes gélifiées obtenues à partir de ces compositions ont confirmé que l'élasticité et la résistance à l'étirement des enveloppes sont satisfaisantes. Elles permettent en outre d'envisager de former des enveloppes pour saucisse, par exemple de type "knack", par un procédé d'extrusion.

Après gélification, on constate par un examen visuel et au toucher que c'est dans la composition de l'exemple 1 que le phénomène de synérèse est le moins prononcé.

On observe par ailleurs, que les compositions des exemples 1 et 4 s'avèrent les plus stables dans le temps.

La pâte préparée à l'exemple 1 a été utilisée pour former des enveloppes de saucisses produites de façon continue par une technique de co-extrusion.

À cet effet, la ligne de production de saucisses est équipée d'une co-extrudeuse et d'un poussoir dirigeant la base de la saucisse en direction de la co-extrudeuse, fabriqués et commercialisés par la société MAREL. On note que la valeur de la viscosité de la pâte de l'exemple 1 a été avantageusement fixée à 62 Pa.s en ajustant les dosages d'amidon et de gomme de cellulose, afin d'assurer un débit constant de 30 kg/h et une pression constante comprise entre 4 et 5 bars à l'entrée de la filière de la co-extrudeuse.

Pour cette production, la base des saucisses est composée notamment de poitrine et de panne de porc, de nitrite de sodium, d'acétate de calcium, de lactate de sodium ou de lactate de potassium, et d'épices telles que du poivre.

À la sortie de l'extrudeuse, le tube continu de saucisse est arrosé en continu par une solution de gélification.

Cette solution de gélification est formée d'eau du réseau et de chlorure de calcium solubilisé dans une proportion de 20 à 25% du poids total de la solution.

Au contact de la solution, l'alginate de sodium gélifie en alginate de calcium, formant ainsi une enveloppe résistante.

Le tube de saucisse pénètre ensuite dans les mâchoires d'une sertisseuse, qui dans un mouvement de rotation découpent le tube en portions de 10 centimètres et pincent les extrémités de l'enveloppe de chaque portion, de façon à emprisonner la base dans l'enveloppe.

L'enveloppe de ces saucisses conserve une forme satisfaisante, notamment elle ne se déchire pas, ni ne se délite, et ses extrémités ne se détachent pas, ni ne laissent échapper de la garniture, lorsque les saucisses sont bouillies, cuites, frits ou stérilisées.

En outre, ces saucisses présentent une tenue à la cuisson, évaluée en mesurant la masse de la saucisse après cuisson, supérieure de 5 à 10% à celle d'une saucisse témoin pourvue d'un boyau naturel animal.

Il convient de noter qu'en abaissant la proportion de gomme de cellulose dans la composition au dessous de 0,8 % du poids humide de la composition tout en conservant un rapport massique cellulose sur amidon compris entre 0,4 et 0,8, on peut obtenir une pâte d'enrobage présentant, outre une élasticité convenable, une viscosité suffisamment faible pour pouvoir la répartir à la surface d'une préparation alimentaire par pulvérisation ou par douchage par immersion en respectant une épaisseur sensiblement régulière.

À titre d'exemple (exemple 5) une enveloppe formée à partir d'une pâte incorporant 9400g d'eau adoucie, 40g d'acide lactique, 350g d'alginate de sodium, 120g d'amidon modifié de pomme de terre soluble à froid (soit un rapport massique amidon sur alginate égal à 0,34), 80g de gomme de cellulose (soit un rapport massique carboxyméthylcellulose sur amidon égal à 0,67), et 10g de sorbate de potassium, a été testée.

L'aspect de l'enveloppe de l'exemple 5 est satisfaisant, mais la résistance mécanique de cette enveloppe est faible. On constate par ailleurs qu'elle se dégrade significativement après deux jours.

L'enveloppe de l'exemple 5 présente une viscosité inférieure à 40 Pa.s qui convient pour une application par immersion ou par pulvérisation. En revanche, elle est impropre à une application par coextrusion. En effet, cette composition faiblement visqueuse peut s'écouler dans les circuits de pompe à vide des poussoirs, et au niveau de la tête de coextrusion, qui ne reste donc pas en charge lors des arrêts de production.

## Revendications

1. Composition aqueuse pour l'enrobage d'une préparation alimentaire, comprenant essentiellement de l'eau, **caractérisée en ce qu'**elle comprend 2 à 5% en poids humide d'alginate, 1 à 2,5% en poids humide d'amidon, et 0,6 à 1,3% en poids humide de carboxyméthylcellulose.

2. Composition selon la revendication 1, **caractérisée en ce qu'**elle comprend 4 à 5% en poids humide d'alginate et 1,2 à 1,8% en poids humide d'amidon et 0,9 à 1,2 % en poids humide de carboxyméthylcellulose.

3. Composition selon l'une quelconque des revendications 1 et 2, **caractérisée en ce que** le rapport massique amidon sur alginate au sein de ladite composition est compris entre 0,2 et 0,45.

4. Composition selon l'une quelconque des revendications 1 à 3, **caractérisée en ce que** le rapport massique carboxyméthylcellulose sur amidon au sein de ladite composition est compris entre 0,4 et 0,8.

5. Composition selon l'une quelconque des revendications 1 à 4, **caractérisée en ce que** ledit alginate est agencé de sorte qu'une solution aqueuse dont le soluté est formé d'un pourcent en masse dudit alginate présente une viscosité comprise entre 0,3 et 0,5 Pa.s à 20°C.

6. Composition selon l'une quelconque des revendications 1 à 4, **caractérisée en ce que** ledit amidon est un amidon soluble à froid, et préférentiellement de l'amidon modifié de pomme de terre soluble à froid.

7. Composition selon l'une quelconque des revendications 1 à 6, **caractérisée en ce que** ladite eau présente une dureté inférieure à 0,2°f, préférentiellement inférieure ou égale à 0,1°f.

8. Composition selon l'une quelconque des revendications 1 à 7, **caractérisée en ce qu'**elle comprend un composant acidifiant appartenant au groupe comprenant au moins l'acide lactique, l'acide citrique, l'acide acétique ou un mélange d'au moins deux desdits acides.

9. Composition selon l'une quelconque des revendications 1 à 8, **caractérisée en ce que** le pH de ladite composition est compris entre 3,8 et 4,2.

10. Composition selon l'une quelconque des revendications 1 à 9, **caractérisée en ce qu'**elle comprend un pourcentage massique de protéine végétale inférieur au pourcentage massique d'alginate dans ladite composition.

11. Composition selon l'une quelconque des revendications 1 à 10, **caractérisée en ce qu'**elle comprend au moins un composé appartenant au groupe comprenant au moins :
- agents colorants alimentaires, de préférence Carmin de cochenille et/ou oléorésine de paprika ;
- agents conservateurs alimentaires, de préférence sorbate de potassium et/ou benzoate de sodium ;
- aromes alimentaires, notamment de la fumée liquide ;
- agents de marquage visuel et/ou gustatif, préférentiellement particules d'épice en poudre de granulométrie convenable, aptes à permettre une co-extrusion de ladite composition autour de ladite préparation alimentaire.

12. Procédé de préparation d'une composition aqueuse selon l'une quelconque des revendications 1 à 11, **caractérisée en ce qu'**il comprend une étape de filtration de la composition au travers d'un filtre de maille inférieure ou égale à 120 micromètres.

13. Procédé de préparation selon la revendication 12, **caractérisée en ce que** la valeur de ladite maille dudit filtre est égale à 80, 100, 110 ou 120 micromètres.

14. Procédé d'enrobage d'une préparation alimentaire avec une enveloppe végétale comestible, **caractérisé en ce qu'**il comprend les étapes suivantes :
- obtention d'une composition aqueuse selon l'une quelconque des revendications 1 à 11 ;
- immersion d'une portion substantielle de ladite préparation alimentaire dans ladite composition, aspersion de ladite composition autour d'une portion substantielle de ladite préparation alimentaire, ou co-extrusion de ladite composition autour de ladite préparation alimentaire, de façon à enrober ladite préparation alimentaire ;
- mise en contact de ladite préparation alimentaire enrobée avec un agent de gélification, de façon à fixer ladite enveloppe.

15. Procédé d'enrobage selon la revendication 14, **caractérisé en ce qu'**il comprend une étape de filtration de ladite composition au travers d'un filtre de maille inférieure ou égale à 120 micromètres.

## Patentansprüche

1. Wässrige Zusammensetzung zum Umhüllen einer Lebensmittelzubereitung, die im Wesentlichen Wasser enthält, **dadurch gekennzeichnet, dass** 2 bis 5 Feuchtgewichts-% Alginat, 1 bis 2,5 Feuchtgewichts-% Stärke und 0,6 bis 1,3 Feuchtgewichts-% Carboxymethylzellulose enthält.

2. Zusammensetzung gemäß Anspruch 1, **dadurch gekennzeichnet, dass** sie 4 bis 5 Feuchtgewichts-% Alginat, 1,2 bis 1,8 Feuchtgewichts-% Stärke und 0,9 bis 1,2 Feuchtgewichts-% Carboxymethylzellulose enthält.

3. Zusammensetzung gemäß einem der Patentansprüche 1 oder 2, **dadurch gekennzeichnet, dass** das Massenverhältnis zwischen Stärke und Alginat innerhalb der Zusammensetzung zwischen 0,2 und 0,45 beträgt.

4. Zusammensetzung gemäß einem der Ansprüche 1 bis 3, **dadurch gekennzeichnet, dass** dass das Massenverhältnis zwischen Carboxymethylzellulose und Stärke innerhalb der Zusammensetzung zwischen 0,4 und 0,8 beträgt.

5. Zusammensetzung gemäß einem der Ansprüche 1 bis 4, **dadurch gekennzeichnet, dass** das Alginat so ausgebildet ist, dass eine wässrige Lösung, die als gelösten Stoff ein Prozent Alginat enthält, eine Viskosität zwischen 0,3 und 0,5 Pa.s bei 20°C aufweist.

6. Zusammensetzung gemäß einem der Ansprüche 1 bis 5, **dadurch gekennzeichnet, dass** die Stärke eine kaltlösliche Stärke und vorzugsweise kaltlösliche modifizierte Kartoffelstärke ist.

7. Zusammensetzung gemäß einem der Ansprüche 1 bis 6, **dadurch gekennzeichnet, dass** das Wasser eine Härte von weniger als 0,2°f, vorzugsweise von weniger als 0,1°f aufweist.

8. Zusammensetzung gemäß einem der Ansprüche 1 bis 6, **dadurch gekennzeichnet, dass** sie eine säuernde Komponente enthält, die zur Gruppe gehört, die wenigstens Milchsäure, Zitronensäure, Essigsäure oder eine Mischung von wenigstens zwei dieser Säuren umfasst.

9. Zusammensetzung gemäß einem der Ansprüche 1 bis 8, **dadurch gekennzeichnet, dass** der pH-Wert der Zusammensetzung zwischen 3,8 und 4,2 beträgt.

10. Zusammensetzung gemäß einem der Ansprüche 1 bis 4, **dadurch gekennzeichnet, dass** in der Zusammensetzung der prozentuale Gewichtsanteil pflanzlichen Proteins geringer ist als der prozentuale Gewichtsanteil an Alginat.

11. Zusammensetzung gemäß einem der Ansprüche 1 bis 10, **dadurch gekennzeichnet, dass** sie wenigstens eine Komponente umfasst, die zur Gruppe gehört, welche mindestens umfasst:
- Lebensmittelfarben, vorzugsweise Koschenillencarmin und/oder Paprikaoleoresin,
- Lebensmittelkonservierungsstoffe, vorzugsweise Kaliumsorbat und/oder Natriumbenzoat;
- Lebensmittelaromen, insbesondere flüssigen Rauch;
- Optische und/oder Geschmacksmarker, vorzugsweise Partikel von Gewürzpulver in geeigneter Granulometrie, die geeignet sind, eine Coextrusion der Zusammensetzung um das Lebensmittel zu erlauben.

12. Herstellungsverfahren für eine wässrige Zusammensetzung gemäß einem der Ansprüche 1 bis 11, **dadurch gekennzeichnet**, dasss es einen Filtrationsschritt der Zusammensetzung durch ein Filter mit einer Maschenweite von weniger oder gleich 120 Mikrometern umfasst.

13. Herstellungsverfahren gemäß Anspruch 12, **dadurch gekennzeichnet, dass** der Wert der Maschenweite 80, 100, 110 oder 120 Mikrometer beträgt.

14. Verfahren zum Umhüllen einer Lebensmittelzubereitung mit einer essbaren pflanzlichen Hülle, **dadurch gekennzeichnet, dass** es die folgenden Schritte umfasst:
- Erhalten einer wässrigen Zusammensetzung gemäß einem der Ansprüche 1 bis 11;
- Eintauchen eines substantiellen Anteils der Lebensmittelzubereitung oder Coextrusion der Zusammensetzung um die Lebensmittelzubereitung, um die Lebensmittelzubereitung zu umhüllen;
- Kontaktieren der Lebensmittelzubereitung mit einem Gelierungsmittel, um die Umhüllung zu fixieren.

15. Verfahren zum Umhüllen gemäß Anspruch 14, **dadurch gekennzeichnet, dass** es einen Filtrationsschritt der Zusammensetzung durch ein Filter mit einer Maschenweite von weniger oder gleich 120 Mikrometern umfasst.

## Claims

1. A water-based composition for coating foodstuffs comprising water as a major component, which comprises between 2 and 5 w/w % alginate, between 1 and 2.5 w/w % starch and between 0.6 and 1.3 w/w % carboxymethyl cellulose.

2. The composition according to claim 1, wherein alginate mass concentration is between 4 and 5 w/w %, starch mass concentration is between 1.2 and 1.8 w/w % and carboxymethyl cellulose mass concentration is between 0.9 and 1.2 w/w %.

3. The composition according to claim 1 or claim 2, wherein the composition has a mass ratio of starch to alginate between about 0.2 and about 0.45.

4. The composition according to any of claims 1-3, wherein the composition has a mass ratio of carboxymethyl cellulose to starch between 0.4 and 0.8.

5. The composition according to any of claims 1-4, wherein an aqueous solution comprising about 1 w/w % of the alginate has a viscosity of 0.3-0.5 Pa.s at a temperature of 20°C.

6. The composition according to any of claims 1-4, wherein the starch is cold-water-soluble starch and preferably is cold-water-soluble modified potato starch.

7. The composition according any of claims 1-6, wherein the water has a hardness of lower than 2 ppm, preferably has a hardness of lower than 1 ppm.

8. The composition according to any of claims 1-7 and further comprising an acidifying compound selected from the group consisting of at least lactic acid, citric acid, acetic acid or a mix of at least two of said acids.

9. The composition according to any of claims 1-8, wherein the pH of the composition is between 3.8 and 4.2.

10. The composition according to any of claims 1-9, and further comprising a mass percentage of vegetable protein lower than that of the alginate in the composition.

11. The composition according to any of claims 1-10, and further comprising at least a compound chosen from the group comprising:
- Food coloring agents, including cochineal carmine and/or oleoresin paprika;
- Food preservatives, including potassium sorbate and/or sodium benzoate;
- Food flavors, including liquid smoke;
- Visual and/or taste marking agents, including spice powder particles with suitable particle size, capable of allowing a co-extrusion of said composition around said foodstuff.

12. A method for manufacturing a water-based composition according to any of claims 1-11 comprising a step of filtering the composition through a filter with a mesh size smaller than 120 micrometers.

13. The method for manufacturing a water-based composition according to claim 12, wherein the filter mesh size is 80, 100, 110 or 120 micrometers.

14. A method for coating a foodstuff with an edible vegetal casing comprising the steps of:
- obtaining a water-based composition according to any of claims 1-11;
- immersing a substantial part of the foodstuff in the composition, or, spray coating the composition around a substantial part of the foodstuff, or co-extrusion of the composition around a substantial part of the foodstuff, so as to coat the foodstuff; and
- bringing the coated foodstuff into contact with a gelling agent, in order to gel the coating.

15. The method for coating a foodstuff according to claim 14 comprising a step of filtering the composition through a filter with a mesh size smaller than 120 micrometers.
